# EUROPEAN PATENT SPECIFICATION

(11) **EP 2 646 760 B1**
(45) Date of publication and mention of the grant of the patent: **31.12.2014**
(21) Application number: 11797117.6
(22) Date of filing: 23.11.2011
(51) Int. Cl.: F24J 2/46

(54) **Pan of a solar collector**
Gehäuse eines Sonnenkollektors
Boîte pour collecteur solaire

(30) Priority: 30.11.2010 IT AN20100206
(43) Date of publication of application: 09.10.2013
(73) Proprietor: Ariston Thermo S.p.A., 60044 Fabriano (Ancona) (IT)
(72) Inventor: TABOCCHINI, Gilberto, I-60044 Fabriano (Ancona) (IT)
(74) Representative: Premru, Rok
(86) International application number: PCT/IB2011/002810
(87) International publication number: WO 2012/073088

(56) References cited:
- EP-A1- 1 775 525
- EP-A2- 2 015 000
- EP-A2- 2 080 963
- WO-A2-2010/011151
- AU-B2- 540 964
- CN-Y- 201 289 246
- DE-A1- 10 321 422
- DE-A1-102008 045 510
- DE-U1- 20 004 502
- DE-U1- 20 004 504
- DE-U1- 29 521 277
- GB-A- 1 603 980
- US-A- 4 252 109
- US-A- 4 838 951

## Description

The object of the present invention is an improved construction-structural element of a thermal solar collector for civil or industrial buildings, in particular the pan of said solar collector.

The invention relates to the field of use of solar energy for a continuously growing field especially in Mediterranean countries, thanks to the advantageous weather conditions, but also in countries with less favourable weather conditions, such as Germany, that however have long encouraged such environment-friendly energy systems through a tax relief and advantage policy.

Solar panels for the production of domestic hot water are known.

The most widespread solar panel in civil systems is the flat-glazed panel, consisting of:
- a transparent cover (hereinafter referred to as "glazed cover"), composed of one or more glass sheets that let the incoming solar radiations pass through and block the outgoing ones;
- an underlying absorbing plate (hereinafter referred to as "absorber"), that absorbs the radiation and transfers the energy gathered to the heat transfer fluid (usually antifreeze fluid, such as for example propylenglycol);
- conduits in thermal contact with said absorbing plate, wherein the thermal carrier fluid subject to heating runs;
- heat insulating material for all parts not exposed to the solar radiation and optionally outer casing for protecting the above components and limiting heat losses of the panel.

Absorber (and related channels in thermal contact) and heat insulating material (in the form of an insulating "airbed" or foaming) are seated within a pan, closed at the top by said glazed cover.

Such solar collectors are manufactured through known techniques and processes about which it is not necessary to dwell too much.

Herein it is sufficient to briefly note that a widely used production process for manufacturing a solar collector is the one consisting in first creating the pan by moulding and then, inserting and fixing (through techniques and means known by the man skilled in the art) the insulating material, the absorber and the glazed cover thereon, in a sequence. It is clear that in order to insert the absorber within the pan it is necessary to provide, on the sidewalls thereof, openings for the passage and the exit of the conduits in thermal contact with the same absorber and for seating the relevant seals.

Such moulded pan, however, constrains e limits the dimensions and the size of the relevant solar collector, since it is not economically advantageous for the manufacturer to have a wide range of moulds, each for each one of the dimensions to be obtained.

As a consequence, solar collectors known to date have standardised dimensions, which implies poor possibility of adaptation to the requirements of the specific case.

Documents DE 103 21 422 A1 and US 2005/103328 A1 describe two different pans of solar collectors.

The object of the present invention is to eliminate at least a part of the drawbacks outlined above.

In particular, a further object of the present invention is to improve and simplify the manufacture of the solar collector.

These and other objects, which shall appear clearly hereinafter, are achieved with a pan of a solar collector according to claim 1.

Other objects can also be obtained through the additional features of the dependent claims.

Further features of the present invention shall be better highlighted by the following description of some preferred embodiments, in accordance with the patent claims and illustrated, by way of a non-limiting example in the enclosed designs, wherein:
- figure 1a shows multiple axonometric views of a first version of the angular joint of the invention;
- figure 1b shows an enlargement of a detail of figure 1a;
- fig. 2a shows an exploded view of the angular joint of fig. 1 and of the components thereof for the mounting on the pan of a solar collector according to the first version of the invention.
- fig. 2b shows the angular joint of fig. 1a mounted on the pan of the solar collector;
- figure 3 shows multiple views of a second version of the angular joint of the invention.
- figure 4 shows an exploded view of the angular joint of fig. 1 and of the components thereof for the mounting on the pan of a solar collector according to the second version of the invention.
- figs. 5a and 5b respectively show two axonometric views of the angular joint of fig. 4 mounted on the pan of a solar collector.
- fig. 6 shows multiple views of a third version of the angular joint of the invention.
- fig. 7 shows an exploded view of the angular joint of fig. 6 and of the components thereof for the mounting on the pan of a solar collector according to the second version of the invention.
- fig. 8 shows an axonometric view of the angular joint of fig. 6 mounted on the pan of the solar collector.
- fig. 9 shows multiple views of a fourth version of the angular joint of the invention.
- figs. 10a, 10b, 10c show the various steps of manufacturing a pan of a solar collector according to a first embodiment, in a sequence.

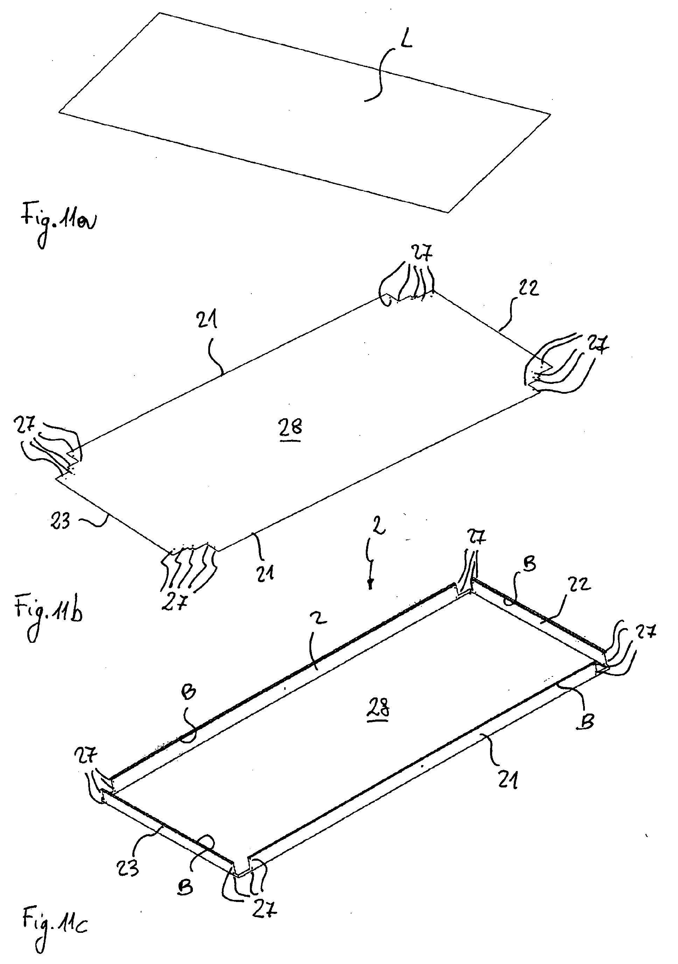

- figs. 11a, 11b, 11c show the various steps of manufacturing a pan of a solar collector according to a second embodiment.

The features of the invention are now described using the references in the figures. It is noted that the above figures, although schematic, reproduce the components of the device in proportions between their dimensions and spatial orientations which are compatible with a possible embodiment which is among the preferred ones.

It is also noted that any dimensional and spatial term (such as "lower", "upper", "right", "left" and similar) refers to the position according to which the angular joint, the construction components thereof and the pan are viewed when the solar collector is installed in operational configuration.

In the description, moreover, reference shall always be made to a solar collector consisting, among the other elements, according to the prior art, of a pan 2, closed at the top by a glazed cover, and of a solar absorber seated therein.

Pan 2 of the solar collector in turn consists of a bottom 28, two sides 21, one top side 22 and a bottom one 23.

According to the invention, said sides 21, 22, 23 are obtained starting from a single flat sheet L (of aluminium and/or alloys thereof) through a known sequence of processes on which it is worth dwelling.

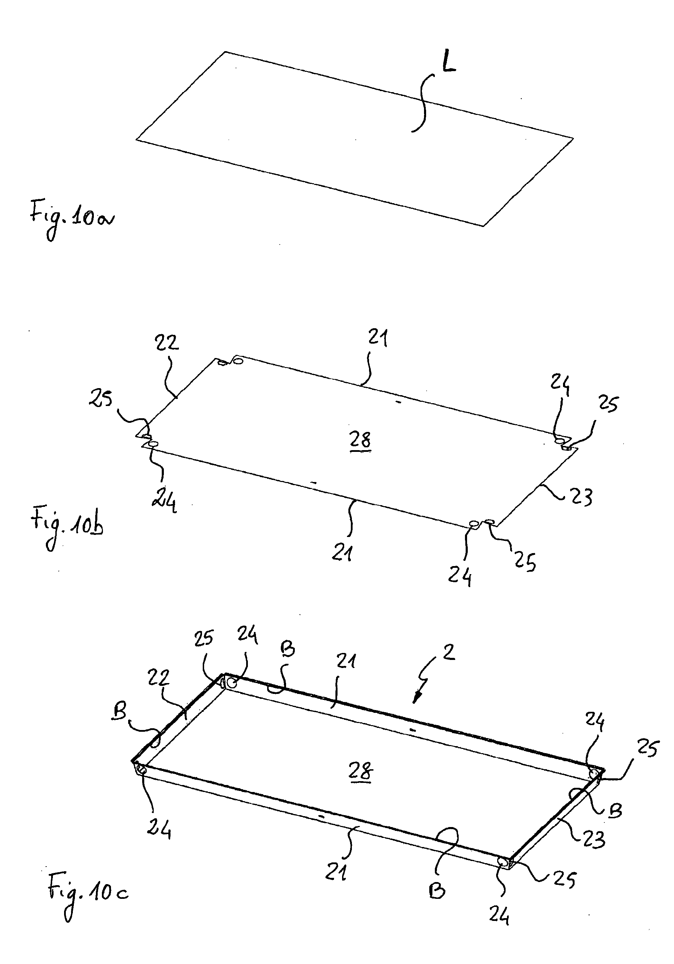

The pan 2 (see figs. 10a-10c) is obtained by turning the flat sheet at the edges thereof so as to determine a pair of side strips 21, a top strip 22 and a bottom one 23 which, subsequently bent upwards, define the respective sides 21, 22, 23 thereof. The top edge B of said sides 21, 22, 23 may further be subject to profiling operations for the reasons that shall be understood during the description.

Since it is necessary for the description of the invention, herein it is already necessary to note that openings 24, 25, 27 (figs. 10a-10c e 11a-11c) of various shape and size must be provided on said sides 21, 22, 23. More in particular, circular holes 24 are made on sides 21 for seating at least the absorber manifold whereas on the top 22 and bottom 23 sides there are provided slots 25 with a substantially rectangular section.

Even more precisely, for the reasons that shall be understood hereinafter, said slots 25 consist of a first portion 251 and of a second portion 252 of dimensions slightly smaller than the first one.

According to the invention, the sides 21, 22, 23 of pan 2 are connected and constrained to one another through suitable angular joints 1 (hereinafter "angular joints").

In other words, said angular joints 1 mainly act as joining elements for sides 21, 22, 23 of pan 2, imparting the structural stiffness to the latter required for the purposes thereof.

Said angular joints 1 further provide support to at least the absorber and the glazed cover of the solar collector, ensure the seal against water infiltrations (and the optional drainage thereof) and provide improved means for handling and properly installing and protecting the same solar collector.

The importance of said invention is clear from this short list, since all of such functions are substantially obtained with a single and simple moulded or die-cast component of thermoplastic material, or aluminium or alloys thereof.

At this point, it is possible to describe the angular joints 1 of the invention in detail, specifying that those shown in the annexed figures are, with no limiting aim, only a few construction versions among all the admissible ones. Elements and features described with reference to one of the types of angular joint 1 represented should therefore be understood as present or that may be extended, even when not expressly stated, to all of the other ones as well.

In all the versions illustrated of the angular joint 1, reference numerals 11 and 12 respectively indicate the walls capable of coupling with sides 21 of pan 2 and with the top 22 and bottom 23 sides thereof. Reference numeral 13, moreover, indicates the base of the angular joint 1 adapted for coupling with bottom 28 of the same pan 2.

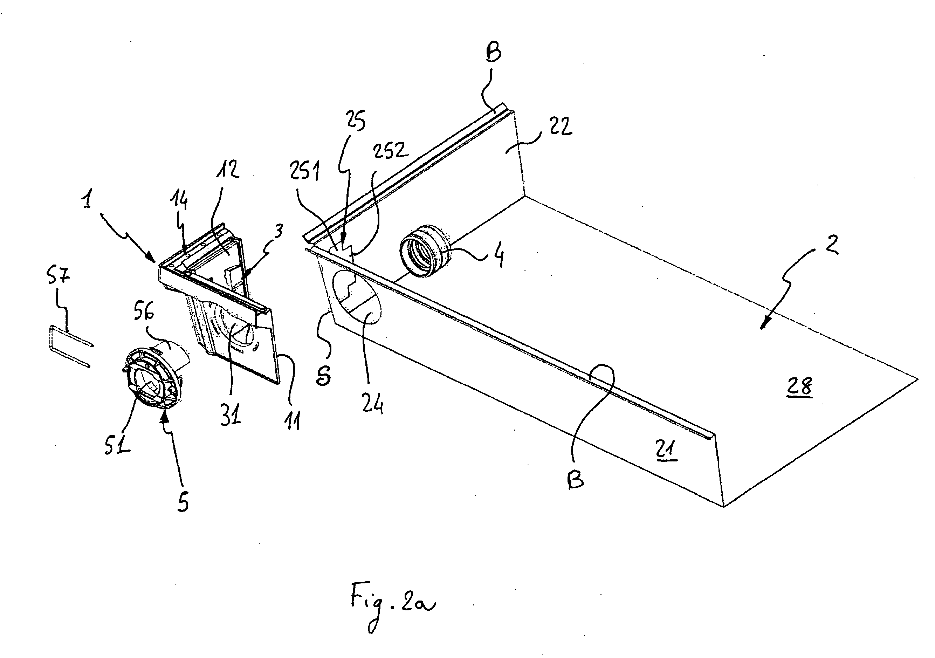

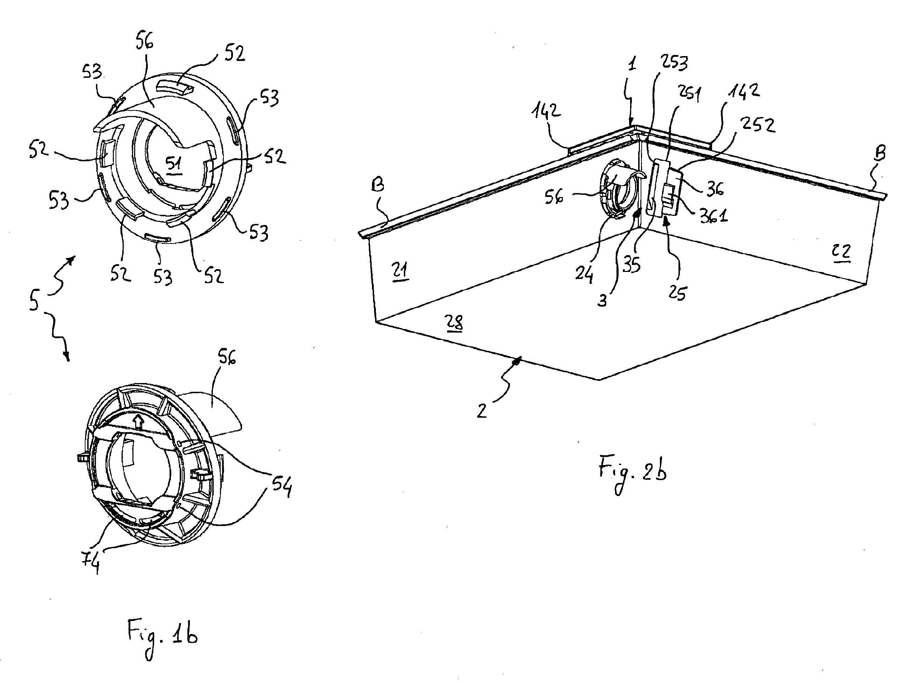

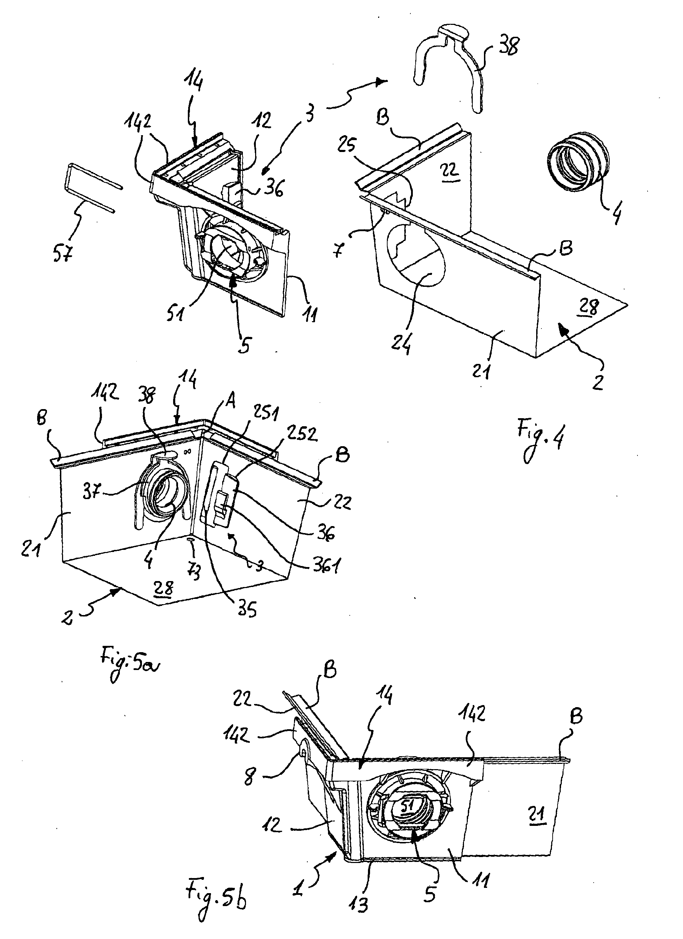

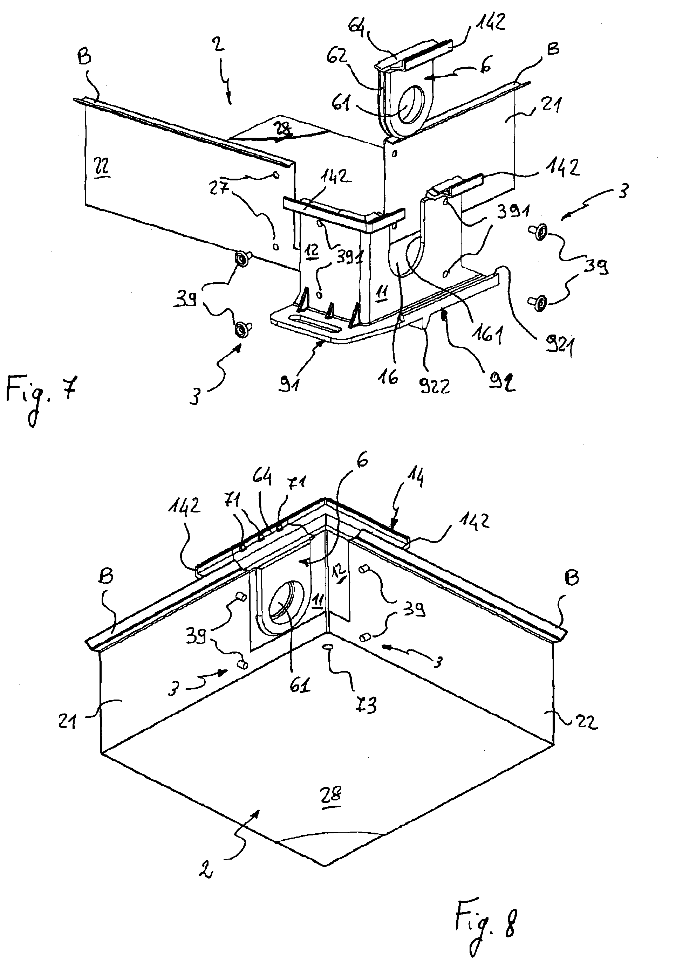

The angular joint 1 further comprises a top border 14 projecting from the lying plane of said walls 11, 12 and lying on a plane substantially horizontal or slightly inclined. At least one portion of edge B (for example shaped as a "V") of said sides 21, 22, 23 rests on border 14 (see, with no distinction, figs. 2b, 5b and 8).

Said angular joints 1, as already partly mentioned, form said reciprocal jointing of sides 21, 22, 23 of pan 2 through suitable locking means 3.

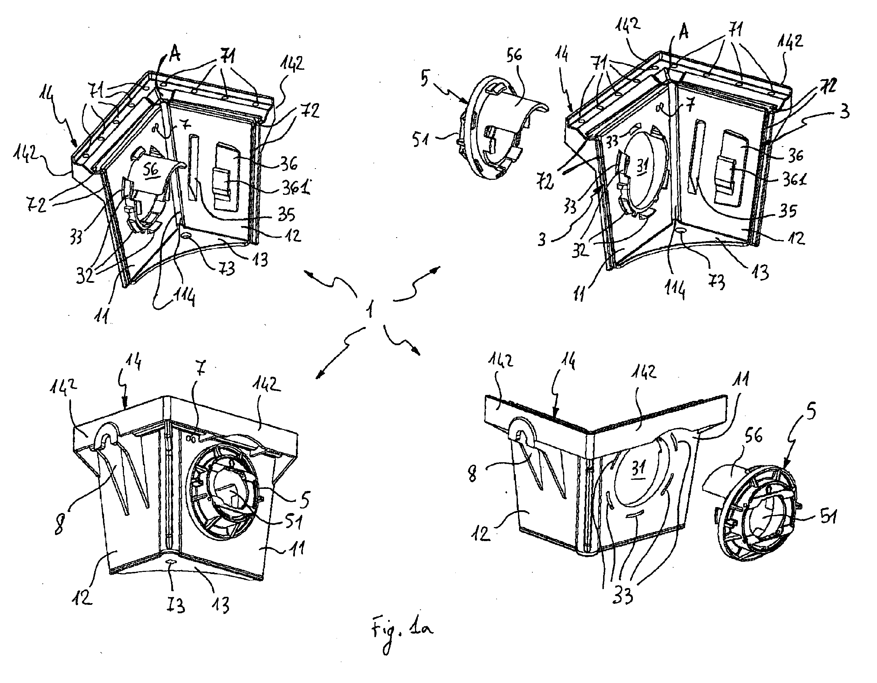

In particular, as shown in figure 1a, said locking means 3 may consist at least in a first jointing tooth 36, in a second non-slip tooth 35, both projecting from wall 12 of angular joint 1, and at least in a series of latches 32 obtained, on the other hand, on the inner face of wall 11 of the same angular joint 1 around the through hole 31 thereof (the function whereof shall be described hereinafter).

The first jointing tooth 36 ensures the fixing of the top 22 and/or bottom side 23 to the inner face of wall 12 of the angular joint 1, whereas latches 32 allow locking sides 21 onto wall 11.

To be more precise, in fact, joint 36 is shaped and sized for constraining, through shape coupling, onto portion 252 of slot 25 of the top 22 and bottom 23 sides of pan 2 whereas the non-slip tooth 35 is capable of abutting against edge 253 of portion 251 of the same slot 25, preventing any subsequent movement, even minimal, of pan 2.

Hole 24 of sides 21 of pan 2, on the other hand, elastically couples onto latches 32 of wall 11 of the angular joint 1, when the angular joint 1 is moved close and forced against edges S thereof.

In fact, latches 32 are designed for deforming under a slight pressure against sides 21 of pan 2 and for returning to the starting configuration thereof after having penetrated within said hole 24, making the process irreversible. In this way, said hole 24 is interfaced and coupled with the through hole 31 of wall 11 of the angular joint 1.

It is clear that, according to the invention, versions of said latches 32 are possible for locking sides 21 of pan 2 to the angular joint 1.

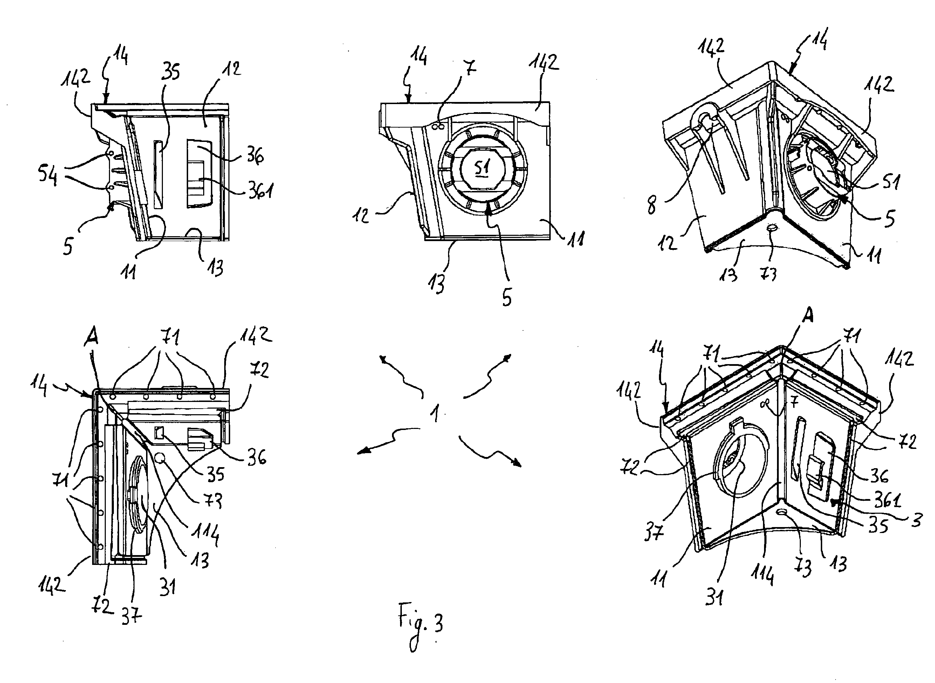

According to a first version, illustrated by way of an example in figs. 3, 4, 5a, 5b, such locking is obtained through a clip 38 that clamps the sheet between itself and wall 11 of the angular joint 1.

Clip 38, in fact, is capable of being inserted onto a seat 37, provided onto the top semi-circumference of the through hole 31 of the angular joint 1, and whereon hole 24 of side 21 of pan 2 weakly engages in advance.

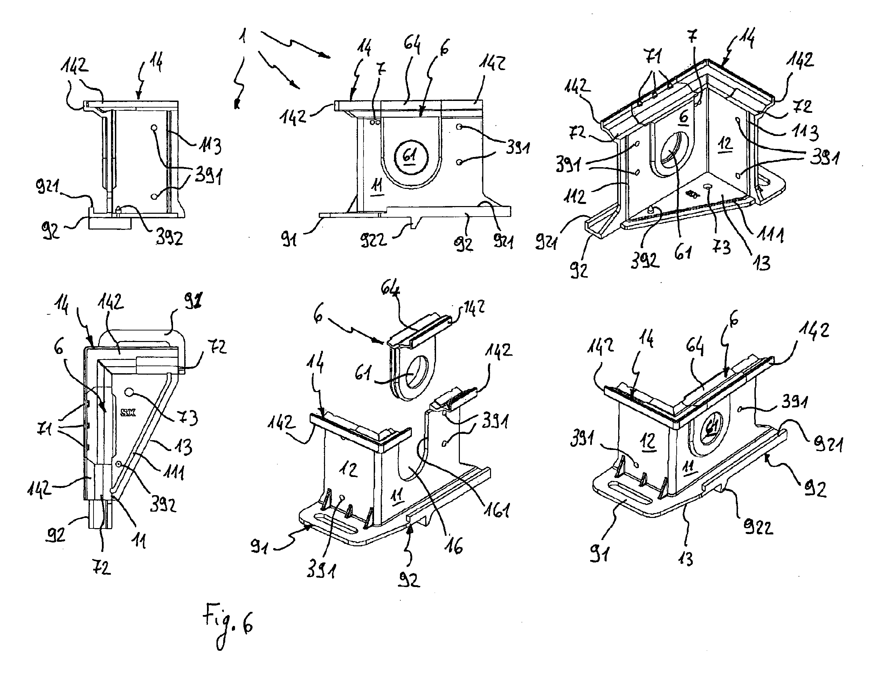

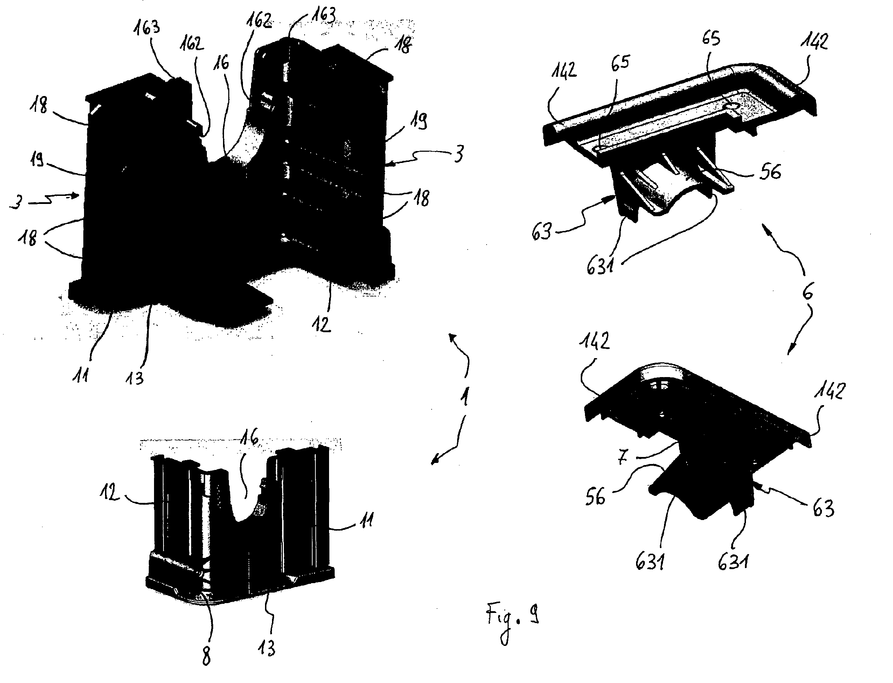

Other equivalent means 3 for locking and fixing pan 2 to the angular joint 1 are respectively shown in figures 6 and 9.

According to the version of fig. 9, the locking system 3 consists in one or more elastic tabs 18, underneath which the ends of sides 21, 22, 23 of pan 2 may be inserted, and in at least one abutment 19 projecting from walls 11, 12 of the angular joint 1; said abutment 19 is capable of elastically coupling onto corresponding (by shape and size) slots provided on said ends (not shown in the figure). The abutment-slot coupling prevents any reciprocal movement of pan 2 relative to the angular joint 1.

Alternative simplified locking means 3 may consist in rivets 39 that mechanically constrain sides 21, 22, 23 of pan 2 to the relative walls 11, 12 of the angular joint 1. By way of an example, reference shall be made to the solution of fig. 6, 7, 8 where, along with said rivets 39, there are shown seats 391, 27 for the seating thereof.

For all the versions described so far, a pin 392 capable of coupling by interference with an equivalent hole, by shape and size, created on bottom 28 of the same pan 2, may further be provided on base 13 of the angular joint 1 (see, for simplicity, fig. 6).

At this point, the support means 5 of the angular joint 1 for the solar absorber and then those for the glazed cover of the solar collector shall be described.

According to a first version (shown by way of a non-limiting example in figs. 1a and 3), said support means 5 of the absorber, adapted for facilitating the mounting and positioning thereof within pan 2, consist of a ring nut 5 of the angular joint 1.

More in particular, said ring nut 5 allows seating at least the end of the absorber manifold and the seal thereof 4 within hole 51 thereof. Said ring nut 5 may be directly created onto the outer face of wall 11 of the angular joint 1 (with which it therefore forms a single body, as shown in fig. 3) or constrained thereon through special quick connection devices 33, 52 (see fig. 1a and 1b, wherein such ring nut 5 is shown in all the details thereof). In both cases, the central through hole 51 of ring nut 5 coincides or couples with that 31 of the angular joint 1.

With reference to such last version of fig. 1b, second latches 52 are provided on the inner face of the ring nut 5, capable of engaging on the edge of the through hole 31 of the angular joint 1 and/or on the semi-circular projecting rib 34 thereof, and centring wedges 53 adapted for engaging onto special seats 33 also arranged radially around said hole 31 (preferably, but not necessarily, at the first latches 32). Said latches 52 and wedges 53 therefore allow mounting ring nut 5 onto the angular joint 1.

According to other possible versions, the support and seating of the manifold are carried out by gates 6 (of the type shown in fig. 6) adapted for being mounted on the four ends of said manifold prior to inserting the solar absorber within pan 2.

As clearly shown in the various views of fig. 6, said gate 6 is provided with a through hole 61 adapted for seating said manifold and is capable of being inserted and fixed within a cavity 16 on wall 11 of the angular joint 1 through coupling between the external groove 62 thereof and side 161 of said cavity 16. Gate 6, preferably made of synthetic rubber EPDM, also acts as seal of the solar absorber manifold.

An alternative simplified version of gate 6 is also possible (see fig. 9) consisting of an insert 6 suitable for closing at the top cavity 16 of wall 11 of the angular joint 1 whereon the absorber manifold and seal 4 thereof abut and are seated.

According to such version, insert 6 is provided with an appendix 63 shaped, at the bottom end thereof, for coupling with the cylindrical outer surface of said manifold and seal 4, locking them against the profile of said cavity 16.

The mounting of insert 6 on the angular joint 1 is ensured by the elastic coupling between the fixing clips 162 of cavity 16 and those 631 of appendix 63 as well as by tightening screws (or equivalent means) for the seating whereof, in fig. 9, seats 65, 163 are respectively shown on insert 6 and the angular joint 1.

For purposes of information completeness, it is useful to note that such gates 6 end at the top with a profile 64 that geometrically and dimensionally adapts to border 14 of the angular joint 1 whereon they are mounted, ensuring the structural continuity thereof.

An absorber-locking tile 56 may also aid in supporting and fixing manifold and optional seal 4 of the solar collector, obtained according to the versions illustrated, directly on the gate or insert 6 (reference shall be made to fig. 9), on the inner face of ring nut 5 at the top semi-circumference of the through hole 51 thereof and/or, likewise, around hole 31 of wall 11 of the angular joint 1.

Tile 56, orthogonal to wall 11 of the angular joint 1, therefore provides a top abutment for said seal 4 and manifold preventing any vertical movement of the absorber.

At least for the versions of figures 1a and 3 (that is, those provided with ring nut 5), the quick connection of the absorber manifold with the "external hydraulic kit" (whereon it is not necessary to dwell as it is well known by the man skilled in the art) is made possible and steady by a fork 57 capable of being inserted within an insertion channel 54 crosswise to the outer face of ring nut 5.

The top border 14 of the angular joint 1 (and optionally of gate or insert 6) further acts as valid support for the glazed cover of the solar collector. Rib 142 of border 14 protects said glazed cover absorbing and cushioning any shock of the solar collector.

The fixing and laying of the glazed cover are entrusted to a first layer of silicone material (not shown) interposed thereinbetween and edge B of sides 21, 22, 23 of pan 2 (a portion whereof, as seen, is seated on said border 14) and between angle A of the angular joint 1 and the same glazed cover. Said layer of silicone material further ensures the seal against water infiltrations.

In order to ensure the complete sealing of the angular joint-pan coupling on base 13 and/or on walls 11, 12 of the angular joint 1 there may be provided grooves 111, 112, 113 (see for example fig. 6) and/or slits 114 (see fig. 1a) capable of being filled with further layers of sealing material. It is clear that said sealing layers may advantageously be replaced by alternative sealing members, such as seals. In any case, against any infiltrations, the angular joint 1 in all the versions thereof is provided with suitable draining means 7 generally consisting of an array of first draining holes 71 obtained on border 14 thereof in the proximity of rib 142 thereof and relative draining channels 72.

Moreover, at least one second draining hole 73 is provided on bottom 13 of the angular joint 1 for draining any condensate formed within the solar collector. In the versions of figs. 1a and 3, at least one third draining hole 74 may be obtained on the bottom of ring nut 5 (see fig. 1b) in order to collect and eject the water infiltrated from seal 4 of the solar absorber manifold.

The angular joint 1 is completed by aeration holes 7 on walls 11, 12 and/or on gate/insert 6 (communicating with similar holes on the sides of pan 2) for the correct ventilation of the solar collector, means 8 for hooking a handle of the "lifting kit" usable for better transportability of the solar collector and an additional clip 361, obtained on wall 12 of the angular joint 1, for fixing an optional sheet for covering the manifold, such as to ensure better finish of the solar collector (in the exemplary figs. 1a, 3, said additional clip 361 is obtained integrally with the jointing tooth 36 widely discussed above).

While it is only shown in fig. 6 but in any case it may also be found in all of the other versions illustrated (similar to all the other elements and details of the angular joints 1 described), a first slotted appendix 91 may be provided on the angular joint 1, in the proximity of base 13 thereof, for mounting the solar collector to the "installation kit for natural circulation solar systems" and a second appendix 92 provided with a kerb 921 for hooking to the "installation kit for forced circulation solar systems". A non-slip foot 922 on appendix 92 of the angular joint 1 prevents the slipping of the solar collector after the installation and laying thereof.

The intended objects are achieved with an angular joint 1 as described in the construction versions thereof, since the various construction components of a solar collector can be mounted and installed on said angular joints 1, through the described means and devices. Finally, said angular joints 1 are suitable for pans of any length and size, solving the problem of the standardisation of the solar collector dimensions.

## Claims

1. Pan (2) of a solar collector suitable for seating at least one solar absorber and closed at the top by a glazed cover comprising at least angular joints (1) for the reciprocal jointing and coupling of its side, top and bottom sides (21, 22, 23), said angular joints in turn comprising:
- at least a first (11) and a second (12) wall
- support means (5; 51, 52, 53, 54, 56, 57; 6; 61, 62, 64, 56; 63, 631, 64, 65, 56) of said solar absorber
- resting means (14, 142) for said glazed cover
**characterised in that**
said side, top and bottom sides (21, 22, 23) of said pan (2) are, respectively, the side strips (21), the top strip (22) and the bottom strip (23) of a single flat sheet (L) bent upwards
and **in that**
- on the inner face of said first wall (11) of said angular joints (1) there are at least provided first locking means (31, 32; 31, 37, 38; 18, 19; 39, 391) for said side sides (21) of said pan (2) on said first wall (11)
- on the inner face of said second wall (12) of said angular joints (1) there are at least provided second locking means (35, 36; 18, 19; 39, 391) for said top and/or bottom sides (22, 23) of said pan (2) on said second wall (12).

2. Pan (2) for a solar collector according to the previous claim
**characterised in that**
each of said second locking means (35, 36; 18, 19; 39, 391) comprises a first jointing tooth (36), said jointing tooth (36) being shaped and sized for constraining, through shape coupling, onto the portion (252) of a slot (25) obtained on the corresponding side (21, 22, 23) of said pan (2).

3. Pan (2) for a solar collector according to the previous claim
**characterised in that**
said second locking means (35, 36; 18, 19; 39, 391) further comprise a second non-slip tooth (35), said non-slip tooth (35) being capable of abutting against the edge (253) of the portion (251) of said slot (25).

4. Pan (2) for solar collector according to claim 1
**characterised in that**
said second (35, 36; 18, 19; 39, 391) or first (31, 32; 31, 37, 38; 18, 19; 39, 391) locking means comprise one or more elastic tabs (18) and at least one abutment (19), underneath said tabs (18) there being inserted the ends of said sides (21, 22, 23) of said pan (2) whereas said abutment (19) is capable of elastically coupling onto slots provided on said ends of said sides (21, 22, 23).

5. Pan (2) for solar collector according to claim 1
**characterised in that**
said second (35, 36; 18, 19; 39, 391) or first (31, 32; 31, 37, 38; 18, 19; 39, 391) locking means consist of rivets (39) capable of being seated onto special seats (391, 27) respectively obtained on said angular joint (1) and on said sides (21, 22, 23) of said pan (2), said rivets (39) mechanically constraining said sides (21, 22, 23) of said pan (2) to said angular joint (1).

6. Pan (2) for solar collector according to at least one of the previous claims
**characterised in that**
said first locking means (31, 32; 31, 37, 38; 18, 19; 39, 391) consist of one or more first latches (32) obtained around a through hole (31) of said angular joint (1), said latches (32) elastically coupling with the perimeter of a hole (24) obtained on said sides (21, 22, 23) of said pan (2), said hole (24) interfacing and coupling with said through hole (31) of said angular joint (1).

7. Pan (2) for solar collector according to at least one of the previous claims from 1 to 5
**characterised in that**
said first locking means (31, 32; 31, 37, 38; 18, 19; 39, 391) consist of a clip (38) capable of clamping said sides (21) between itself and said angular joint (1), said clip (38) being inserted on a seat (37) provided on the top semi-circumference of a through hole (31) of said angular joint (1) and whereon a hole (24) obtained on said sides (21, 22, 23) of said pan (2) engages.

8. Pan (2) for solar collector according to any previous claim
**characterised in that**
each angular joint (1) further comprises a base (13), on said base (13) can be provided a pin (392) capable of coupling by interference with a hole obtained on the bottom (28) of said pan (2).

9. Pan (2) for solar collector according to any previous claim
**characterised in that**
said support means (5; 51, 52, 53, 54, 56, 57; 6; 61, 62, 64, 56; 63, 631, 64, 65, 56) of said solar absorber consist of a ring nut (5) associated to said first wall (11) of said angular joint (1) that is provided with a through hole (51) capable of interfacing and coupling with said through hole (31) of said angular joint (1), said through hole (51) of said ring nut (5) seating at least the end of the manifold of said solar absorber and the relevant seal (4).

10. Pan (2) for solar collector according to the previous claim
**characterised in that**
said ring nut (5) is a single body with the outer face of said first wall (11).

11. Pan (2) for solar collector according to the claim 9
**characterised in that**
said ring nut (5) is capable of being constrained on the outer face of said first wall (11) by means of its:
- second latches (52) capable of engaging on the edge and/or rib (34) of said through hole (31) of said first wall (11)
- centring wedges (53) suitable for engaging onto special seats (33) arranged radially to said through hole (31)
said second latches (52) and said centring wedges (53) allowing the mounting of said ring nut (5) on said angular joint (1).

12. Pan (2) for solar collector according to claims 9 to 11
characetrised in that
on said ring nut (5) an insertion channel (54) crosswise the outer face thereof is provided, said channel (54) being capable of seating a fork (57) for the quick connection of said manifold of said solar absorber to an "external hydraulic kit".

13. Pan (2) for solar collector according to any previous claim from 1 to 8
**characterised in that**
said support means (5; 51, 52, 53, 54, 56, 57; 6; 61, 62, 64, 56; 63, 631, 64, 65, 56) of said solar absorber consist of a gate (6) capable of being mounted on the ends of the manifold of said solar absorber, said gate (6) being placed at a cavity (16) of said first wall (11) of said angular joint (1).

14. Pan (2) for solar collector according to the previous claim
**characterised in that**
said gate (6) comprises a through hole (61) suitable for seating said manifold of said solar absorber and an external groove (62) capable of coupling to the side (161) of said cavity (16) of said first wall (11) of said angular joint (1).

15. Pan (2) for solar collector according to claim 13 or 14
**characterised in that**
said gate (6) is made of synthetic rubber, said gate (6) also acting as seal of said manifold of said solar absorber.

16. Pan (2) for solar collector according to claim 13
**characterised in that**
said gate (6) is an insert (6) suitable for closing said cavity (16) of said first wall (11) of said angular joint (1) at the top, said insert (6) comprising an appendix (63):
- the end whereof is shaped for coupling with the outer surface of said manifold and seal (4) of said solar absorber, locking them into said cavity (16)
- which is provided with first fixing clips (631) for the elastic coupling of said insert (6) with corresponding second fixing clips (162) of said cavity (16).

17. Pan (2) for solar collector according to the previous claim
**characterised in that**
said insert (6) is provided with seats (65) suitable for inserting tightening screws, capable of engaging onto corresponding seats (163) of said angular joint (1), said tightening screws ensuring the coupling between said insert (6) and said first wall (11) of said angular joint (1).

18. Pan (2) for solar collector according to any one of the previous claims
from 9 on
**characterised in that**
said ring (5) and/or gate and/or insert (6) further comprise an absorber locking tile (56) capable of providing an upper stop to at least said manifold of said solar absorber, said absorber locking tile (56) being respectively obtained on the inner face of said ring nut (5) at the top semi-circumference of the through hole (51) thereof and/or of the through hole (31) of said inner face of said first wall (11) and/or directly on said gate and/or insert (6).

19. Pan (2) for solar collector according to any previous claim
**characterised in that**
said support means (14, 142) for said glazed cover consist of the top border (14) of said first (11) and second (12) wall of said angular joint (1) and/or of said gate or insert (6), said glazed cover being protected from any shocks by a rib (142) of said border (14).

20. Pan (2) for solar collector according to the previous claim
**characterised in that**
said border (14) is suitable for seating at least one portion of the edge (B) of said side, top and bottom (21, 22, 23) sides of said pan (2), between said edge (B) and said glazed cover and between said glazed cover and the angle (A) of said angular joint (1) there being interposed a layer of silicone material and/or equivalent means for the fixing and laying thereof.

21. Pan (2) for solar collector according to any previous claim
**characterised in that**
each angular joint (1) further comprises sealing means (111, 112, 113, 114) against water infiltrations of the angular joint (1) - pan (2) coupling, said sealing means (111, 112, 113, 114) comprising grooves and/or slits (111, 112, 113, 114) capable of being filled with layers of sealing material and/or seals.

22. Pan (2) for solar collector according to any previous claim
**characterised in that**
each angular joint (1) further comprises draining means (71, 72, 73, 74) for discharging any water infiltrations in the angular joint (1) - pan (2) coupling and/or any condensation formed within said solar collector, said draining means (7; 71, 72, 73, 74) consisting at least of:
- a set of first draining holes (71) obtained on said top border (14) of said first (11) and second (12) wall and/or of said gate or insert (6) and relevant draining channels (72), and/or
- a second draining hole (73) obtained on said base (13) of said angular joint (1).

23. Pan (2) for solar collector according to the previous claim and according to at least claim 9
**characterised in that**
at least one third draining hole (74) is obtained on the bottom of said ring nut (5), said at least one third draining hole (74) being suitable for ejecting any water penetrated between said ring nut (5) and said seal (4) of said manifold of said solar absorber.

24. Pan (2) for solar collector according to any previous claim
**characterised in that** each angular joint (1) further comprises aeration holes (7) for the correct ventilation of said solar collector, said aeration holes (7) being obtained on said first (11) and/or second (12) wall of said angular joint (1) and/or on said gate or insert (6).

25. Pan (2) for solar collector according to any previous claim
**characterised in that** each angular joint (1) further comprises means (8) for hooking a handle or the "lifting kit" usable for better transportability of said solar collector.

26. Pan (2) for solar collector according to any previous claim
**characterised in that** on said second wall (12) it comprises an additional clip (361) for fixing a sheet for covering said manifold of said solar absorber, said sheet allowing better finish of said solar collector.

27. Pan (2) for solar collactor according to the previous claim and claim 2
**characterised in that**
said additional clip (361) is obtained on said jointing tooth (36).

28. Pan (2) for solar collector according to any previous claim
**characterised in that** each angular joint (1) further comprises, in the proximity of the base (13) thereof:
- a first slotted appendix (91) for assembling said solar collector to the "installation kit for natural circulation solar systems", and/or
- a second appendix (92, 921, 922) in turn fitted with
- a kerb (921) for hooking to the "installation kit for forced circulation solar systems", and/or
- a non-slip foot (922) suitable for preventing the slipping of said solar collector after the installation and laying thereof.

29. Pan (2) for solar collector according to any one of the previous claim
**characterised in that**
said flat sheet (L) is rounded off at the edges thereof.

30. Pan (2) for solar collector according to any previous claim
**characterised in that**
said angular joint (1) is made by moulding and/or die casting of thermoplastic material or aluminium or alloys thereof.

31. Solar collector of the type comprising at least one pan (2), closed at the top by a glazed cover according to one or more of the previous claims from 1 to 30, and a solar absorber.

## Patentansprüche

1. Schale (2) eines Sonnenkollektors, die geeignet ist, mindestens einen Solarabsorber aufzunehmen, und die oben durch eine Glasabdeckung geschlossen ist, die mindestens Winkelverbindungen (1) für das gegenseitige Verbinden und Ankoppeln ihrer seitlichen, oberen und unteren Seiten (21, 22, 23) aufweist, wobei die Winkelverbindungen ihrerseits Folgendes aufweisen:
- mindestens eine erste (11) und eine zweite (12) Wand
- Stützmittel (5; 51, 52, 53, 54, 56, 57; 6; 61, 62, 64, 56; 63, 631, 64, 65, 56) des Solarabsorbers
- Auflagemittel (14, 142) für die Glasabdeckung
**dadurch gekennzeichnet, dass**
die seitlichen, oberen und unteren Seiten (21, 22, 23) der Schale (2) jeweils die Seitenstreifen (21), der obere Streifen (22) und der unteren Streifen (23) eines einzelnen flachen Bleches (L) sind, das nach oben gebogen ist,
und wobei
- auf der Innenseite der ersten Wand (11) der Winkelverbindungen (1) mindestens erste Verriegelungsmittel (31, 32; 31, 37, 38; 18, 19; 39, 391) für die seitlichen Seiten (21) der Schale (2) an der ersten Wand (11) bereitgestellt sind
- auf der Innenseite der zweiten Wand (12) der Winkelverbindungen (1) mindestens zweite Verriegelungsmittel (35, 36; 18, 19; 39, 391) für die oberen und/oder unteren Seiten (23) der Schale (2) an der zweiten Wand (12) bereitgestellt sind.

2. Schale (2) für einen Sonnenkollektor nach dem vorhergehenden Anspruch,
**dadurch gekennzeichnet, dass**
jedes der zweiten Verriegelungsmittel (35, 36; 18, 19; 39, 391) einen ersten Verbindungszahn (36) aufweist, wobei der Verbindungszahn (36) geformt und bemessen ist, um durch Verbinden der Form auf dem Abschnitt (252) eines Schlitzes (25) zu halten, der an der entsprechenden Seite (21, 22, 23) der Schale (2) erhalten ist.

3. Schale (2) für einen Sonnenkollektor nach dem vorhergehenden Anspruch,
**dadurch gekennzeichnet, dass**
die zweiten Verriegelungsmittel (35, 36; 18, 19; 39, 391) ferner einen zweiten rutschfesten Zahn (35) aufweisen, wobei der rutschfesten Zahn (35) geeignet ist, an die Kante (253) des Abschnitts (251) des Schlitzes (25) anzugrenzen.

4. Schale (2) für einen Sonnenkollektor nach dem Anspruch 1,
**dadurch gekennzeichnet, dass**
die zweiten (35, 36; 18, 19; 39, 391) oder die ersten (31, 32; 31, 37, 38; 18, 19; 39, 391) Verriegelungsmittel eine oder mehrere elastische Laschen (18) und mindestens ein Auflager (19) aufweisen, wobei unter den Laschen (18) die Enden der Seiten (21, 22, 23) der Schale (2) dort eingefügt werden, während das Auflager (19) geeignet ist, elastisch mit Schlitzen verbunden zu werden, die an den Enden der Seiten (21, 22, 23) bereitgestellt sind.

5. Schale (2) für einen Sonnenkollektor nach dem Anspruch 1,
**dadurch gekennzeichnet, dass**
die zweiten (35, 36; 18, 19; 39, 391) oder ersten (31, 32; 31, 37, 38; 18, 19; 39, 391) Verriegelungsmittel aus Nieten (39) bestehen, die geeignet sind, auf besondere Sitze (391, 27) gesetzt zu werden, die jeweils auf der Winkelverbindung (1) und auf den Seiten (21, 22, 23) der Schale (2) erhalten sind, wobei die Nieten (39) mechanisch die Seiten (21, 22, 23) der Schale (2) an der Winkelverbindung (1) halten.

6. Schale (2) für einen Solarkollektor nach wenigstens einem der vorhergehenden Ansprüche,
**dadurch gekennzeichnet, dass**
die ersten Verriegelungsmittel (31, 32; 31, 37, 38; 18, 19; 39, 391) aus einem oder mehreren ersten Riegeln (32) bestehen, die um eine Durchgangsbohrung (31) der Winkelverbindung (1) erhalten sind, wobei die Riegel (32) elastisch mit dem Umfang eines Lochs (24) verbunden sind, das an den Seiten (21, 22, 23) der Schale (2) erhalten ist, wobei sich das Loch (24) mit der Durchgangsbohrung (31) der Winkelverbindung (1) überlagert und damit verbunden ist.

7. Schale (2) für einen Solarkollektor nach wenigstens einem der vorhergehenden Ansprüche 1 bis 5,
**dadurch gekennzeichnet, dass**
die ersten Verriegelungsmittel (31, 32; 31, 37, 38; 18, 19; 39, 391) aus einer Klemme (38) bestehen, die geeignet ist, die Seiten (21) zwischen sich und der Winkelverbindung (1) festzuklemmen, wobei die Klemme (38) in einen Sitz (37) eingesetzt ist, der auf dem oberen Halbumfang einer Durchgangsbohrung (31) der Winkelverbindung (1) bereitgestellt ist und worauf ein Loch (24) eingreift, das an den Seiten (21, 22, 23) der Schale (2) erhalten ist.

8. Schale (2) für einen Sonnenkollektor nach einem der vorhergehenden Ansprüche,
**dadurch gekennzeichnet, dass**
jede Winkelverbindung (1) ferner eine Basis (13) aufweist, wobei auf die Basis (13) ein Stift (392) bereitgestellt werden kann, der geeignet ist, sich durch Überlagerung mit einem Loch zu verbinden, das auf dem Boden (28) der Schale (2) erhalten ist.

9. Schale (2) für einen Sonnenkollektor nach einem der vorhergehenden Ansprüche,
**dadurch gekennzeichnet, dass**
die Stützmittel (5; 51, 52, 53, 54, 56, 57; 6; 61, 62, 64, 56; 63, 631, 64, 65, 56) des Solarabsorbers aus einer Ringmutter (5) bestehen, die mit der ersten Wand (11) der Winkelverbindung (1) verbunden ist, die eine Durchgangsbohrung (51) aufweist, die geeignet ist, sich mit der Durchgangsbohrung (31) der Winkelverbindung (1) zu überlagern und damit zu verbinden, wobei die Durchgangsbohrung (51) der Ringmutter (5) mindestens das Ende des Verteilers des Solarabsorber und die entsprechende Dichtung (4) aufnimmt.

10. Schale (2) für einen Sonnenkollektor nach dem vorhergehenden Anspruch,
**dadurch gekennzeichnet, dass**
die Ringmutter (5) einen einzigen Körper mit der Außenseite der ersten Wand (11) bildet.

11. Schale (2) für einen Sonnenkollektor nach dem Anspruch 9,
**dadurch gekennzeichnet, dass**
die Ringmutter (5) geeignet ist, auf der Außenseite der ersten Wand (11) durch ihre
- zweiten Riegel (52) festgehalten zu werden, die geeignet sind, an der Kante und/oder Rippe (34) der Durchgangsbohrung (31) der ersten Wand (11) einzugreifen,
- Zentrierkeile (53) festgehalten zu werden, die geeignet sind, an speziellen Sitzen (33) einzugreifen, die radial zu der Durchgangsbohrung (31) angeordnet sind,
wobei die zweiten Riegel (52) und die Zentrierkeile (53) das Montieren der Ringmutter (5) auf der Winkelverbindung (1) gestatten.

12. Schale (2) für einen Solarkollektor nach einem der Ansprüche 9 bis 11, **dadurch gekennzeichnet, dass**
auf der Ringmutter (5) ein Aufnahmekanal (54) quer zu der Außenseite davon bereitgestellt ist, wobei der Kanal (54) geeignet ist, eine Gabel (57) für das schnelle Verbinden des Verteilers des Solarabsorbers an einen "externen Hydraulikbausatz" aufzunehmen.

13. Schale (2) für einen Sonnenkollektor nach einem der vorhergehenden Ansprüche von 1 bis 8,
**dadurch gekennzeichnet, dass**
die Stützmittel (5; 51, 52, 53, 54, 56, 57; 6; 61, 62, 64, 56; 63, 631, 64, 65, 56) des Solarabsorbers aus einem Gate (6) bestehen, das geeignet ist, an den Enden des Verteilers des Solarabsorbers befestigt zu werden, wobei das Gate (6) an einem Hohlraum (16) der ersten Wand (11) der Winkelverbindung (1) angeordnet wird.

14. Schale (2) für einen Sonnenkollektor nach dem vorhergehenden Anspruch,
**dadurch gekennzeichnet, dass**
das Gate (6) eine Durchgangsbohrung (61), die geeignet ist, den Verteiler des Solarabsorber aufzunehmen, und eine äußere Nut (62) umfasst, die geeignet ist, mit der Seite (161) des Hohlraums (16) der ersten Wand (11) der Winkelverbindung (1) verbunden zu werden.

15. Schale (2) für einen Solarkollektor nach einem der Ansprüche 13 bis 14,
**dadurch gekennzeichnet, dass**
das Gate (6) aus Synthetikkautschuk erstellt ist, wobei das Gate (6) auch als Dichtung des Verteilers des Solarabsorbers dient.

16. Schale (2) für einen Sonnenkollektor nach dem Anspruch 13,
**dadurch gekennzeichnet, dass**
das Gate (6) ein Einsatz (6) ist, der geeignet ist, den Hohlraum (16) der ersten Wand (11) der Winkelverbindung (1) oben zu schließen, wobei der Einsatz (6) einen Zusatz (63) umfasst:
- dessen Ende geformt ist, um mit der Außenseite des Verteilers und der Dichtung (4) des Solarabsorbers verbunden zu werden, indem sie in den Hohlraum (16) gesperrt werden
- der erste Befestigungsklemmen (631) zum elastischen Verbinden des Einsatzes (6) mit den entsprechenden zweiten Befestigungsklemmen (162) des Hohlraums (16) aufweist.

17. Schale (2) für einen Sonnenkollektor nach dem vorhergehenden Anspruch,
**dadurch gekennzeichnet, dass**
der Einsatz (6) Sitze (65) aufweist, die zum Einsetzen von Spannschrauben geeignet sind, die an entsprechenden Sitzen (163) der Winkelverbindung (1) eingreifen können, wobei die Spannschrauben die Verbindung zwischen dem Einsatz (6) und der ersten Wand (11) der Winkelverbindung (1) gewährleisten.

18. Schale (2) für einen Sonnenkollektor nach einem der vorhergehenden Ansprüche von 9 an,
**dadurch gekennzeichnet, dass**
der Ring (5) und/oder das Gate und/oder der Einsatz (6) ferner eine Verriegelungsplatte des Absorbers (56) umfassen, die geeignet ist, einen oberen Anschlag für mindestens den Verteiler des Solarabsorbers bereitzustellen, wobei die Verriegelungsplatte des Absorbers (56) jeweils auf der Innenseite der Ringmutter (5) am oberen Halbumfang der Durchgangsbohrung (51) davon und/oder der Durchgangsbohrung (31) der Innenseite der ersten Wand (11) und/oder direkt auf dem Gate und/oder dem Einsatz (6) erhalten ist.

19. Schale (2) für einen Sonnenkollektor nach einem der vorhergehenden Ansprüche,
**dadurch gekennzeichnet, dass**
die Stützmittel (14, 142) für die Glasabdeckung aus dem oberen Rand (14) der ersten (11) und zweiten (12) Wand der Winkelverbindung (1) und/oder aus dem Gate oder dem Einsatz (6) bestehen, wobei die Glasabdeckung durch eine Rippe (142) des Randes (14) vor Stößen geschützt ist.

20. Schale (2) für einen Sonnenkollektor nach dem vorhergehenden Anspruch,
**dadurch gekennzeichnet, dass**
der Rand (14) geeignet ist, mindestens einen Abschnitt der Kante (B) der seitlichen, oberen und unteren (21, 22, 23) Seiten der Schale (2) zwischen der Kante (B) und der Glasabdeckung und zwischen der Glasabdeckung und dem Winkel (A) der Winkelverbindung (1) aufzunehmen, wobei eine Schicht aus Silikonmaterial und/oder gleichwertige Mittel zum Befestigen und Verlegen davon dort eingefügt sind.

21. Schale (2) für einen Sonnenkollektor nach einem der vorhergehenden Ansprüche,
**dadurch gekennzeichnet, dass**
jede Winkelverbindung (1) ferner Dichtungsmittel (111, 112, 113, 114) gegen Wasserinfiltrationen aus der Verbindung zwischen der Winkelverbindung (1) und der Schale (2) umfasst, wobei die Dichtungsmittel (111, 112, 113, 114) Nuten und/oder Schlitze (111, 112, 113, 114) umfassen, die geeignet sind, mit Schichten aus Dichtungsmaterial und/oder Dichtungen gefüllt zu werden.

22. Schale (2) für einen Sonnenkollektor nach einem der vorhergehenden Ansprüche,
**dadurch gekennzeichnet, dass**
jede Winkelverbindung (1) ferner Entwässerungsmittel (71, 72, 73, 74) zum Ablassen von Wasserinfiltrationen in der Verbindung zwischen der Winkelverbindung (1) und der Schale (2) und/oder von Kondensation, die sich im Solarkollektor gebildet hat, umfassen, wobei die Entwässerungsmittel (7; 71, 72, 73, 74) mindestens aus Folgendem bestehen:
- einem Satz von ersten Drainagelöchern (71), die an dem oberen Rand (14) der ersten (11) und zweiten (12) Wand und/oder des Gates oder Einsatzes (6) erhalten sind, und entsprechenden Drainagekanäle (72) und/oder
- einem zweiten Drainageloch (73), das an der Basis (13) der Winkelverbindung (1) erhalten ist.

23. Schale (2) für einen Sonnenkollektor nach dem vorhergehenden Anspruch und mindestens nach Anspruch 9,
**dadurch gekennzeichnet, dass**
mindestens ein drittes Drainageloch (74) auf dem Boden der Ringmutter (5) erhaltenen ist, wobei das mindestens eine dritte Drainageloch (74) geeignet ist, das Wasser auszustoßen, das zwischen der Ringmutter (5) und der Dichtung (4) des Verteilers des Solarabsorbers eingedrungen ist.

24. Schale (2) für einen Sonnenkollektor nach einem der vorhergehenden Ansprüche,
**dadurch gekennzeichnet, dass** jede Winkelverbindung (1) ferner Belüftungslöcher (7) für das korrekte Belüften des Sonnenkollektors umfasst, wobei die Belüftungslöcher (7) auf der ersten (11) und/oder zweiten (12) Wand der Winkelverbindung (1) und/oder auf dem Gate oder dem Einsatz (6) erhalten sind.

25. Schale (2) für einen Sonnenkollektor nach einem der vorhergehenden Ansprüche,
**dadurch gekennzeichnet, dass** jede Winkelverbindung (1) ferner Mittel (8) zum Einhängen eines Griffes oder des "Bausatzes" umfasst, die zur besseren Transportierbarkeit des Sonnenkollektors verwendbar sind.

26. Schale (2) für einen Sonnenkollektor nach einem der vorhergehenden Ansprüche,
**dadurch gekennzeichnet, dass** sie auf der zweiten Wand (12) eine zusätzliche Klemme (361) zum Befestigen einer Platte zum Abdecken des Verteilers des Solarabsorbers aufweist, wobei die Platte ein besseres Finish des Sonnenkollektors gestattet.

27. Schale (2) für einen Sonnenkollektor nach dem vorhergehenden Anspruch und Anspruch 2,
**dadurch gekennzeichnet, dass**
die zusätzliche Klemme (361) auf dem Verbindungszahn (36) erhalten ist.

28. Schale (2) für einen Sonnenkollektor nach einem der vorhergehenden Ansprüche,
**dadurch gekennzeichnet, dass** jede Winkelverbindung (1) ferner in der Nähe der Basis (13) davon Folgendes umfasst:
- einen ersten geschlitzten Zusatz (91) für die Montage des Sonnenkollektors an den "Möntagesatz für Solaranlagen mit natürlicher Zirkulation" und/oder
- einen zweiten Zusatz (92, 921, 922), der wiederum mit
- einem Randstreifen (921) zum Einhängen in den "Montagesatz für Solaranlagen mit Zwangsumlauf' ausgestattet ist, und/oder
- eine rutschfeste Standvorrichtung (922), die zum Verhindern des Rutschens des Sonnenkollektors nach der Installation und dem Einbau davon geeignet ist.

29. Schale (2) für einen Solarkollektor nach einem der vorhergehenden Ansprüche,
**dadurch gekennzeichnet, dass**
die flache Platte (L) an deren Rändern abgerundet ist.

30. Schale (2) für einen Sonnenkollektor nach einem der vorhergehenden Ansprüche,
**dadurch gekennzeichnet, dass**
die Winkelverbindung durch Formen und/oder Druckgießen von thermoplastischem Material oder Aluminium oder Legierungen davon erstellt ist.

31. Solarkollektor in der Bauart, die mindestens eine Schale (2), die oben durch eine Glasabdeckung geschlossen ist, nach einem oder mehreren der vorhergehenden Ansprüche 1 bis 30 und einen Solarabsorber umfasst.

## Revendications

1. Cadre (2) d'un collecteur solaire apte à y poser au moins un capteur solaire et fermé en dessus par un couvercle vitré comprenant au moins des joints angulaires pour permettre la jonction et l'accouplement sur le cotés en haut et en bas (21,22,23) c'est-à-dire des joints angulaires comprenant à leur tour :
- au moins une première (11) et une seconde (12) paroi
- moyens de support (5; 51, 52, 53, 54, 56, 57; 6; 61, 62, 64, 56; 63, 631, 64, 65, 56) dudit absorbeur solaire
moyens de repos (14, 142) pour ledit couvercle vitré **caractérisé en ce que**
ledit côté, côtés supérieur et inférieur (21, 22, 23) dudit cadre (2) sont, respectivement, les bandes latérales (21), la bande supérieure (22) et la bande inférieure (23) d'une feuille plate unique (L) courbée vers le haut et **en ce que**
- sur la face interne de la première paroi (11) desdits joints angulaires (1) il y a au moins prévus les premiers moyens de verrouillage (31, 32, 31, 37, 38; 18, 19; 39, 391) pour lesdits côtés latéraux (21) dudit cadre (2) sur ladite première paroi (11)
- sur la face interne de ladite seconde paroi (12) desdits joints angulaires (1) il y a au moins prévu un deuxième moyen de verrouillage (35, 36; 18, 19; 39, 391) pour lesdits côtés supérieur et / ou inférieur (22, 23) dudit cadre (2) sur ladite seconde paroi (12).

2. Cadre (2) pour un collecteur solaire selon la revendication précédente
**caractérisé en ce que**
chacun desdits deuxièmes moyens (35, 36; 18, 19; 39, 391) de verrouillage comprend une première dent 'assemblage (36), ladite dent d'assemblage (36) étant formée et dimensionnée pour contraindre, par couplage de forme, sur la partie (252) d'une fente (25) obtenue sur le côté correspondant (21, 22, 23) dudit cadre (2).

3. Cadre (2) pour un collecteur solaire selon la revendication précédente
**caractérisé en ce que**
ledit second moyen de verrouillage (18; 35, 19; 36, 39, 391) comprennent en outre une seconde dent antidérapant (35), lesdites dents antidérapant (35) étant aptes à venir en butée contre le bord (253) de la partie (251) de ladite fente (25).

4. Cadre (2) pour un collecteur solaire selon la revendication 1
**caractérisé en ce que**
ledit second (35, 36; 18, 19; 39, 391) ou premier (31, 32; 31, 37, 38; 18, 19; 39, 391) moyens de verrouillage comprennent une ou plusieurs languettes élastiques (18) et au moins une butée (19), sous lesdites pattes (18) y étant insérées les extrémités desdits côtés (21, 22, 23) dudit cadre (2), tandis que ladite butée (19) est capable de coupler de manière élastique sur des fentes prévues sur lesdites extrémités desdits côtés (21, 22, 23).

5. Cadre (2) pour un collecteur solaire selon la revendication 1
**caractérisé en ce que**
ledit deuxième (35, 36; 18, 19; 39, 391) ou premier (31, 32; 31, 37, 38; 18, 19; 39, 391) des moyens de verrouillage sont constitués de rivets (39) susceptibles d'être positionnés sur des sièges spéciaux (391, 27) respectivement obtenus sur ledit joint angulaire (1) et sur lesdits côtés (21, 22, 23) dudit cadre (2), lesdits rivets (39) contraignant mécaniquement lesdits côtés (21, 22, 23) dudit cadre (2) audit joint angulaire (1).

6. Cadre (2) pour collecteur solaire selon au moins l'une des revendications précédentes,
**caractérisé en ce que**
lesdits premiers moyens de verrouillage (31, 37; 38, 18; 31, 19; 32, 39, 391) consistent en un ou plusieurs premiers verrous (32) obtenus dans un trou de passage (31) dudit joint angulaire (1), lesdits verrous (32) couplant de manière élastique avec le périmètre d'un trou (24) obtenu sur lesdits côtés (21, 22, 23) dudit cadre (2), ledit trou (24) d'interface et de couplage avec ledit trou traversant (31) dudit joint angulaire (1).

7. Cadre (2) pour collecteur solaire selon au moins l'une des revendications précédentes de 1 à 5
**caractérisé en ce que**
lesdits premiers moyens de verrouillage (31, 37; 38, 18; 31, 19; 32, 39, 391) sont constitués par une pince (38) capable du serrage desdits côtés (21) entre elle-même et ledit joint angulaire (1), ladite pince (38) étant insérée sur un siège (37) prévu sur la demi-circonférence supérieure d'un trou traversant (31) dudit joint angulaire (1) et sur lequel un trou (24) obtenu sur lesdits côtés (21, 22, 23) dudit cadre (2) est s'engage.

8. Cadre (2) pour capteur solaire selon l'une quelconque des revendications précédentes
**caractérisé en ce que**
chaque joint angulaire (1) comprend en outre une base (13), sur ladite base (13) peut être prévue une goupille (392) capable de se coupler par interférence avec un trou obtenu sur le fond (28) dudit cadre (2).

9. Cadre (2) pour capteur solaire selon l'une quelconque des revendications précédentes
**caractérisé en ce que**
lesdits moyens de support (5; 51, 52, 53, 54, 56, 57; 6; 61, 62, 64, 56; 63, 631, 64, 65, 56) dudit absorbeur solaire se composent d'un écrou à anneau (5) associé à ladite première paroi (11) dudit joint angulaire (1) qui est pourvu d'un trou traversant (51) capable de s'interfacer et de se coupler avec ledit trou traversant (31) dudit joint angulaire (1), ledit trou traversant (51) dudit écrou à anneau (5) pose au moins à l'extrémité du collecteur de l'absorbeur solaire et le joint pertinent (4).

10. Cadre (2) pour capteur solaire selon la revendication précédente
**caractérisé en ce que**
ledit écrou à anneau (5) est un seul corps avec la face externe de ladite première paroi (11).

11. Cadre (2) pour capteur solaire selon la revendication 9,
**caractérisé en ce que**
ledit écrou à anneau (5) est capable d'être contraint sur la face extérieure de ladite première paroi (11) par l'intermédiaire de son :
- deuxième verrous (52) capable de s'engager sur le bord et / ou nervure (34) dudit trou traversant (31) de ladite première paroi (11)
- cales de centrage (53) apte à s'engager sur des sièges spéciaux (33) disposés radialement autour dudit trou traversant (31)
lesdits deuxièmes verrous (52) et lesdites cales de centrage (53) permettant le montage dudit écrou à anneau (5) sur ledit joint angulaire (1).

12. Cadre (2) pour capteur solaire selon les revendications de 9 à 11
**caractérisé en ce que**
sur ledit écrou à anneau (5) un canal d'insertion (54) en travers de la face externe de celui-ci est prévu, ledit canal (54) étant capable d'accueillir une fourche (57) pour le raccordement rapide dudit collecteur dudit absorbeur solaire à un « kit hydraulique externe ».

13. Cadre (2) pour capteur solaire selon l'une quelconque des revendications précédentes de 1 à 8
**caractérisé en ce que**
lesdits moyens de support (5; 51, 52, 53, 54, 56, 57; 6; 61, 62, 64, 56; 63, 631, 64, 65, 56) dudit absorbeur solaire sont constitués d'une porte (6) capable d'être montée sur les extrémités du collecteur de l'absorbeur solaire, ladite porte (6) étant placée à une cavité (16) de ladite première paroi (11) dudit joint angulaire (1).

14. Cadre (2) pour capteur solaire selon la revendication précédente
**caractérisé en ce que**
ladite porte (6) comprend un trou traversant (61) apte pour y poser ledit collecteur dudit absorbeur solaire et une rainure externe (62) capable de se coupler au côté (161) de ladite cavité (16) de ladite première paroi (11) dudit joint angulaire (1).

15. Cadre (2) pour capteur solaire selon la revendication 13 ou 14
**caractérisé en ce que**
ladite porte (6) est faite de caoutchouc synthétique, ladite porte (6) agissant également en tant que joint d'étanchéité dudit collecteur de l'absorbeur solaire.

16. Cadre (2) pour capteur solaire selon la revendication 13
**caractérisé en ce que**
ladite porte (6) est un insert (6) apte à fermer ladite cavité (16) de ladite première paroi (11) dudit joint angulaire (1) dans la partie supérieure, ledit insert (6) comprenant un appendice (63) :
- l'extrémité est conformée pour le couplage avec la surface extérieure dudit collecteur et joint d'étanchéité (4) dudit absorbeur solaire, les verrouillant dans ladite cavité (16)
- qui est muni avec des premiers clips de fixation (631) pour l'accouplement élastique dudit insert (6) avec les deuxièmes clips de fixation correspondant (162) de ladite cavité (16).

17. Cadre (2) pour capteur solaire selon la revendication précédente
**caractérisé en ce que**
ledit insert (6) est prévu avec des sièges (65) convenant pour l'insertion des vis de serrage, en mesure de s'engager sur les sièges correspondants (163) dudit joint angulaire (1), ladite vis de serrage assurant le couplage entre ledit insert (6) et ladite première paroi (11) dudit joint angulaire (1).

18. Cadre (2) pour capteur solaire selon l'une quelconque des revendications précédentes de 9 à
**caractérisé en ce que**
ladite bague (5) et / ou porte et / ou insert (6) comprennent en outre une tuile de verrouillage de l'absorbeur (56) capable de fournir une butée supérieure au moins audit collecteur dudit absorbeur solaire, ladite tuile de verrouillage de l'absorbeur (56) étant respectivement obtenue sur la face interne de ladite bague (5) à la demi-circonférence supérieure du trou traversant (51) de celui-ci et / ou du trou de passage (31) de ladite face intérieure de ladite première paroi (11) et / ou directement sur ladite porte et / ou insert (6).

19. Cadre (2) pour capteur solaire selon l'une quelconque des revendications précédentes
**caractérisé en ce que**
lesdits moyens de support (14, 142) pour ledit couvercle vitré consistent en la bordure supérieure (14) de ladite première (11) et seconde (12) paroi dudit joint angulaire (1) et / ou de ladite porte ou insert (6), ledit couvercle vitré protégé contre les chocs par une nervure (142) de ladite bordure (14).

20. Cadre (2) pour capteur solaire selon la revendication précédente
**caractérisé en ce que**
ladite bordure (14) convient pour y poser au moins une partie du bord (B) dudit côté, les côtés de dessus et de fond (21, 22, 23) et dudit cadre (2), entre ledit bord (B) et ledit vitrage couvercle vitré et entre ledit couvercle vitré et l'angle (a) dudit joint angulaire (1), elle est interposée une couche de matériau de silicone et / ou un moyen équivalent pour la fixation et la pose de celui-ci.

21. Cadre (2) pour capteur solaire selon l'une quelconque des revendications précédentes
**caractérisé en ce que**
chaque joint angulaire (1) comprend en outre des moyens d'étanchéité (111, 112, 113, 114) contre les infiltrations d'eau du joint angulaire (1) - cadre (2) de couplage, lesdits moyens d'étanchéité (111, 112, 113, 114) comportant des rainures et / ou des fentes (111, 112, 113, 114) apte à être remplies avec des couches de matériau et / ou des joints d'étanchéité.

22. Cadre (2) pour capteur solaire selon l'une quelconque des revendications précédentes
**caractérisé en ce que**
chaque joint angulaire (1) comprend en outre des moyens de drainage (71, 72, 73, 74) pour décharger des infiltrations d'eau dans le joint angulaire (1) - cadre (2) de couplage et / ou l'eau de condensation formée à l'intérieur dudit collecteur solaire, lesdits moyens de drainage (7; 71, 72, 73, 74) constitués d'au moins :
- un premier ensemble de trous de drainage (71) obtenus sur ledit bord supérieur (14) de ladite première (11) et seconde (12) paroi et / ou de ladite porte ou insert (6) et des canaux de drainage correspondants (72), et / ou
- un second trou de drainage (73) obtenu sur ladite base (13) dudit joint angulaire (1).

23. Cadre (2) pour capteur solaire selon la revendication précédente et selon au moins la revendication 9
**caractérisé en ce que**
au moins un troisième trou de drainage (74) est obtenu sur le fond de ladite bague (5), ledit au moins troisième trou de drainage (74) étant adapté pour éjecter de l'eau pénétrée entre ladite bague (5) et ledit joint d'étanchéité (4) dudit collecteur dudit absorbeur solaire.

24. Cadre (2) pour capteur solaire selon l'une quelconque des revendications précédentes
**caractérisé en ce que** chaque joint angulaire (1) comprend en outre l'aération des trous (7) pour la ventilation correcte dudit capteur solaire, lesdits trous d'aération (7) étant obtenus sur lesdites première (11) et / seconde (12) paroi ou ledit joint angulaire (1) et / ou sur ladite porte ou insert (6)

25. Cadre (2) pour capteur solaire selon l'une quelconque des revendications précédentes
**caractérisé en ce que** chaque joint angulaire (1) comprend en outre des moyens (8) d'accrochage d'une poignée ou le « kit de levage » utilisable pour une meilleure transportabilité du capteur solaire.

26. Cadre (2) pour capteur solaire selon l'une quelconque des revendications précédentes
**caractérisé en ce que** sur ladite deuxième paroi (12) il comprend une pince supplémentaire (361) pour fixer une feuille pour recouvrir ledit collecteur dudit absorbeur solaire, la feuille permettant une meilleure finition dudit collecteur solaire.

27. Cadre (2) pour capteur solaire selon la revendication précédente et la revendication 2
**caractérisé en ce que**
ladite pince supplémentaire (361) est obtenue sur ladite dent de jonction (36).

28. Cadre (2) pour capteur solaire selon l'une quelconque des revendications précédentes
**caractérisé en ce que** chaque joint angulaire (1) comprend en outre, à proximité de la base (13) de celui-ci :
- un premier appendice à fente (91) pour assembler ledit collecteur solaire pour le «kit de montage pour les systèmes solaires à circulation naturelle », et / ou
- un deuxième appendice (92, 921, 922), à son tour équipé de
- une bordure (921) pour accrocher au «kit d'installation pour les systèmes solaires à circulation forcée », et / ou
- un pied antidérapant (922) adapté pour empêcher audit capteur solaire de glisser après l'installation et la pose de celui-ci.

29. Cadre (2) pour capteur solaire selon l'une quelconque des revendications précédentes
**caractérisé en ce que**
ladite feuille plate (L) est arrondie sur les bords de celle-ci.

30. Cadre (2) pour capteur solaire selon l'une quelconque des revendications précédentes
**caractérisé en ce que**
ledit joint angulaire est réalisé par moulage et / ou de la matrice de coulée de matière thermoplastique ou de l'aluminium ou des alliages de ceux-ci.

31. Collecteur solaire, du type comprenant au moins un cadre (2), fermé en haut par un couvercle vitré selon l'une ou plusieurs des revendications précédentes de 1 à 30, et un absorbeur solaire.
